# EUROPEAN PATENT SPECIFICATION

(11) **EP 2 482 603 B1**
(45) Date of publication and mention of the grant of the patent: **08.08.2018**
(21) Application number: 10818321.1
(22) Date of filing: 28.06.2010
(51) Int. Cl.: H04W 72/12

(54) **METHOD AND DEVICE FOR IMPLEMENTING ASYMMETRICAL BANDWIDTH SYSTEM**
VERFAHREN UND VORRICHTUNG ZUR IMPLEMENTIERUNG EINES SYSTEMS MIT ASYMMETRISCHER BANDBREITE
PROCÉDÉ ET DISPOSITIF DE MISE EN UVRE D'UN SYSTÈME À BANDE PASSANTE ASYMÉTRIQUE

(30) Priority: 23.09.2009 CN 200910190225
(43) Date of publication of application: 01.08.2012
(73) Proprietor: ZTE Corporation, Shenzhen, Guangdong 518057 (CN)
(72) Inventor: ZHANG, Qinghong, Shenzhen Guangdong 518057 (CN); TAN, Huanxi, Shenzhen Guangdong 518057 (CN); LU, Xianming, Shenzhen Guangdong 518057 (CN)
(74) Representative: Novagraaf Technologies
(86) International application number: PCT/CN2010/074639
(87) International publication number: WO 2011/035627

(56) References cited:
- WO-A1-2008/108223
- CN-A- 1 464 653
- CN-A- 101 505 538
- CN-A- 101 507 300
- "Proposals for LTE-Advanced Technologies", 3GPP DRAFT; R1-081948 LTE-ADVANCED TECHNOLOGIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080505 - 20080509, 14 May 2008 (2008-05-14), XP050596776, [retrieved on 2008-05-14]
- ZTE: "Asymmetric band aggregation and anchor carrier", 3GPP DRAFT; R1-091701 ASYMMETRIC BANDWIDTH AGGREGATION AND ANCHOR CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339238, [retrieved on 2009-04-28]
- 3GPP: "3rd Generation Partnership Project; Technical Specification Group Radio Access Network; Evolved Universal Terrestrial Radio Access (E-UTRA); Physical layer procedures (Release 8)", 3GPP DRAFT; DRAFT36213-880, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 September 2009 (2009-09-01), XP050388082, [retrieved on 2009-09-18]

## Description

### Field of the present invention

The present invention relates to the field of Long Term Evolution (LTE) mobile communication system, and specifically to a method and a device for implementing an uplink and downlink asymmetrical bandwidth system.

### Background of the present invention

With the development of wireless broadband communication technology, the wireless spectrum resource has become more and more precious as a non-renewable resource.

In the LTE and the future Fourth Generation (4G) wireless communication system, the most widely used Frequency Division Duplex (FDD) mode is a system based on an uplink and downlink symmetrical bandwidth. However, for the application of a network, people usually use the network as a download tool more often than as an upload tool, i.e., the demand for downlink required spectrum resource exceeds that for uplink required spectrum resource. Consequently, when the downlink resource is just made full use of, the uplink resource will be wasted. However, under a present LTE FDD protocol framework, the system bandwidths of the uplink and downlink are symmetrical, i.e., the protocol prescribes that the number of spectrum resources used by the uplink is the same as that used by the downlink.

In nowadays when the wireless spectrum resource is increasingly limited, the waste of wireless spectrum resource is the waste of use cost of operators' wireless resources. But under the present LTE FDD protocol framework, there is not a solution for the waste of the uplink spectrum resources.

Patent document WO2008/108223 discloses a mobile communication system employing an Orthogonal Frequency Division Multiplexing (OFDM) scheme, and more particularly to a base station apparatus and a communication control method.

### Summary of the present invention

The invention is set out in the appended set of claims. The embodiments and/or examples of the following description which are not covered by the appended claims are considered as not being part of the present invention. The present invention provides a method and a system for implementing an asymmetrical bandwidth system in the present FDD protocol framework so as to overcome the defects of the prior art.

The technical problem of the present invention is solved by the following technical solution: a method for implementing an asymmetrical bandwidth system, specifically including the steps of: within a spectrum range limited at uplink, an evolved node B scheduling physical uplink share channel resources and configuring physical random access channel resources and resources used for a sounding reference signal; a user equipment initiating random access according to the configuration of the physical random access channel resources, and establishing a Radio Resource Control (RRC) connection with the evolved node B; the evolved node B semi-persistently scheduling the user equipment; and the user equipment carrying, in a semi-persistent scheduling state, uplink control information through a physical uplink share channel.

In order to ensure that the bandwidths occupied by the Physical Uplink Share Channel (PUSCH), the Physical Random Access Channel (PRACH) and the Sounding Reference Signal (SRS) are limited in a limited range, the spectrum range is x≥y≥1.4 megahertz (MHz), wherein a bandwidth of a downlink system is x MHz, and a bandwidth of an uplink system is y MHz.

Preferably, for the design of uplink share channel frequency modulation and the design of sounding reference signal frequency modulation, it is necessary to ensure the spectrum occupied after frequency modulation is the same as the limitation of uplink spectrum resource. The period of semi-persistent scheduling is the period of periodic Channel Quality Indicator (CQI) feedback.

Specifically, the uplink control information comprises CQI, channel matrix Rank Indication (RI), Pre-coding Matrix Indicator (or Pre-coding Matrix Index, PMI), and partial Acknowledgement (ACK)/Negative acknowledgement (NACK) feedback information; and Schedule Request (SR) information is implemented in a way that the evolved node B semi-persistently schedules the user equipment.

A further solution is that for an ACK/NACK feedback which is not able to be scheduled in the semi-persistent scheduling state, an uplink grant with respect to the ACK/NACK feedback which is not able to be scheduled is transmitted by the evolved node B at the same time of the transmission of a physical downlink share channel.

The present invention also relates to a device for implementing an asymmetrical bandwidth system, which includes: a resource planning module, configured to, within a limited uplink spectrum range, schedule the physical uplink share channel and configures the physical random access channel; and an uplink control information processing module, configured to carry uplink control information under a semi-persistent scheduling through the physical uplink share channel when a user equipment initiates random access according to the configuration of the physical random access channel and establishes an RRC link.

The device for implementing an asymmetrical bandwidth system also includes: a frequency-hopping module for limiting the bandwidth range of the physical uplink share channel, and the bandwidth range limited by the frequency-hopping module is x≥y≥1.4 MHz, wherein a bandwidth of a downlink system is x MHz, and a bandwidth of an uplink system is y MHz.

Specifically, the uplink control information processing module includes a CQI/RI/PMI feedback module, an active grant module and an ACK/NACK feedback module.

In comparison with the prior art, the beneficial effects of the present invention are that: 1) in the method for implementing an asymmetrical bandwidth system of the present invention, within the limited uplink spectrum range, the user equipment (UE) carries all the uplink control information except SR information by the physical uplink share channel in the semi-persistent scheduling state, so that a Physical Uplink Control Channel (PUCCH) processing module is not required in the processing of an uplink physical layer in the system, moreover, there is no need to modify the protocol, an uplink system bandwidth is ensured to be less than or equal to a downlink system bandwidth, and the design of uplink and downlink asymmetrical bandwidth system can be implemented under the present FDD protocol framework to thereby save the uplink spectrum resource; 2) in the method for implementing an asymmetrical bandwidth system of the present invention, the configuration of PUSCH and SRS frequency modulation ensures that spectrum occupied by the PUSCH and the SRS is the same as the limitation of uplink spectrum resource, so that the application range of the bandwidth is fully under the control of the evolved node B, thereby ensuring that the uplink bandwidth cannot be restrained by protocol given bandwidth options, as a result, the uplink bandwidth can be more flexibly used; 3) in the device for implementing an asymmetrical bandwidth system of the present invention, the fact that the physical uplink share channel carries all the uplink control information except SR information is realized through the resource planning module, by actively performing semi persistent schedule (SPS) grant for the user equipment and checking whether or not the BSR reported by the UE is empty, it can be determined whether to schedule the UE, through which the function of the SR can be replaced, so that the PUCCH processing module is not required in the processing of the uplink physical layer in the system, and the processing capacity of the uplink bandwidth on the evolved node B side can be reduced to thereby simplify the processing function on the evolved node B side, to further save the hardware cost.

### Brief Description of the Drawings

Fig. 1 is a schematic diagram of distribution of PUCCH, PUSCH, PRACH and SRS in the whole uplink system bandwidth;
Fig. 2 is a flowchart of uplink processing of a method for implementing an asymmetrical bandwidth system of the present invention; and
Fig. 3 is a module diagram of a device for implementing an asymmetrical bandwidth system of the present invention.

### Detailed Description of the Embodiments

The present invention is further described in detail below through specific embodiments in conjunction with drawings.

The embodiment of the present invention relates to a method for implementing an asymmetrical bandwidth system, wherein an Evolved Node B (eNodeB) configures PRACH spectrum resources and SRS spectrum resources within a limited uplink bandwidth range, a UE initiates random access on the limited PRACH spectrum resources and the establishment of an RRC connection is finished, the eNodeB semi-statically schedules the UE within the limited uplink spectrum range, the UE carries all the uplink control information except the SR information through the PUSCH in a semi-persistent scheduling state, the eNodeB judges whether to schedule the user equipment through actively performing grant for the user equipment and checking the buffer size report, through which the function of the SR can be replaced, if the ACK/NACK of Physical DownLink Share Channel (PDSCH) cannot be carried through semi-persistently scheduled PUSCH, the eNodeB performs uplink grant for the UE while transmitting the PDSCH.

In order to ensure that all the uplink data are sent on the bandwidth specified by the evolved node B, the design idea of the embodiments of the present invention is as follows: the spectrum resources occupied by the PUSCH, SRS and PRACH are ensured to be within the limited bandwidth range when the evolved node B schedules the PUSCH, configures the PRACH and SRS and performs PUSCH and SRS frequency modulation. The evolved node B completely avoids using the PUCCH through a reasonably designed PUSCH scheduling algorithm.

The implementation solution of the embodiment of the present invention is exemplified as follows.

Scheduling the use of the PUSCH by the evolved node B makes the PUSCH available each time when it is necessary to send ACK/NACK, CQI, RI and PMI. Therefore, the ACK/NACK, CQI, RI and PMI are automatically sent on the PUSCH, i.e., all the uplink control information except SR is sent by using the PUSCH.

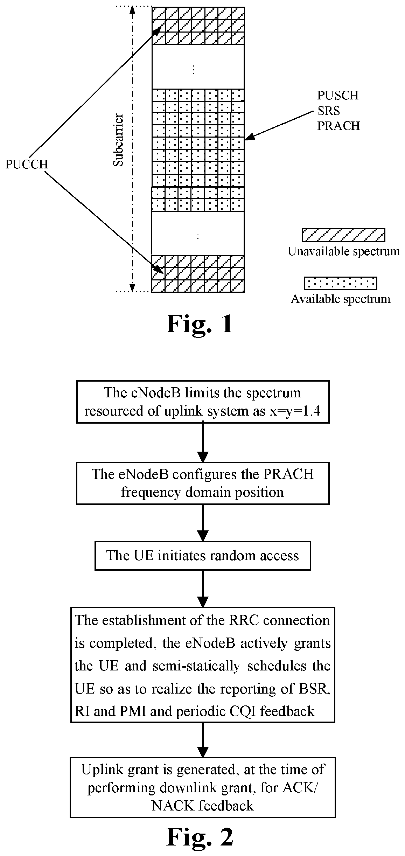

Afterwards, the sending of SR information is replaced in an active grant manner. Configuring SRS bandwidth, PUSCH spectrum resource allocation, PRACH, time and frequency domain position and frequency-hopping design ensure that the spectrum range is within a predetermined range. As shown in Fig. 1, all the uplink channels and signals can only be sent in the available resources limited by the evolved node B.

The function of SR is realized in a way that the eNodeB actively performs SRS grant to the UE and checks whether or not the Buffer Size Report (BSR) of the UE is empty so as to determine whether to schedule the UE immediately.

Taking the LTE FDD system as an example, it is assumed that the bandwidth of downlink system is x MHz, the uplink carrier frequency is fc MHz, and the bandwidth of uplink system is y MHz, which means that the uplink available spectrum range is [fc, fc+y].

In the above, x represents the size of system bandwidth prescribed in the protocol, which is set as 1.4, 3, 5, 10, 15, 20 in the LTE R8 and can be extended to 100 in the LTE R10, x≥y≥1.4 MHz.

Referring to Fig. 2, detailed descriptions of the present invention during implementation process will be given below in conjunction with drawings.

Step 1: the eNodeB limits the uplink system spectrum resources as x≥y≥1.4, that is, the uplink channel resources can only be selected within the above limited resource range.

Step 2: the eNodeB configures PRACH frequency domain position, and the eNodeB configures the PRACH within the above limited range.

What should be noted is that, the PRACH frequency domain position is selected within y MHz carrier frequency of the uplink system, and other configuration is the same as that of the PRACH under symmetrical bandwidth.

Step 3: the UE initiates random access on the PRACH spectrum configured by the eNodeB.

Step 4: the random access is completed, the establishment of an RRC connection is completed, within the range limited in Step 1, the frequency domain resources of SRS are configured, the eNodeB semi-persistently schedules the periodic information feedback service of the UE, wherein the period of Semi Persistent Schedule (SPS) is kept the same as that of the periodic CQI feedback.

If the UE has any uplink control information within a semi-persistently scheduled sub-frame, the information can be automatically fed back to the evolved node B through the PUSCH.

At this time, the UE can report the BSR in the SPS, and can automatically carry CQI, PMI, RI and partial ACK/NACK information in these uplink data.

Step 5: for the ACK/NACK corresponding to the PDSCH which is not fed back in the above step, Uplink Grant (UL Grant) is transmitted while the transmission of the PDSCH.

In the LTE, the PUSCH and the PUCCH of the same UE are not sent simultaneously. If the uplink control information and the service information need to be sent simultaneously, both the control information and the service information are sent on the PUSCH.

In the frequency-hopping design of the SRS and the PUSCH, there is still a need to ensure that the spectrum allocated to the UE is within the limited uplink spectrum range.

Specific introduction will be given again by embodiment 2.

It is assumed that, in the LTE FDD system, the bandwidth of the system is 20 MHz, and 100 Resource Blocks (RBs) are marked as RB0, RB1, RB2, ..., RB99. Only 70 RBs of RB21, RB22, ..., RB90 can be used for the uplink. The specific implementation process is given below.

Step 1: the eNodeB limits the spectrum resources available for the uplink system as the RBs between RB21 and RB90.

Step 2: the eNodeB configures the spectrum resources of the PRACH between RB21 and RB90. In the embodiment, the spectrum resources of the PRACH are configured as RB41, RB42, ..., RB46.

Step 3: the UE initiates random access within the eNodeB specified PRACH spectrum.

Step 4: the random access is completed, an RRC connection is established successfully, the periodic CQI feedback service of the UE is semi-persistently scheduled, within the range of RB21 to RB90, sending bandwidth of the SRS is configured, and the frequency-hopping manner of the PUSCH is designed. Wherein, the period of SPS is configured as the period of CQI feedback. The configuration of above frequency domain resources needs to meet the limiting conditions in Step 1, i.e., the RBs allocated to the UE cannot exceed the range of RB21 to RB90.

Step 5: for the ACK/NACK which is not fed back by SPS scheduled uplink sub-frame, it is necessary to send uplink grant while transmitting the PDSCH, so as to ensure that the ACK/NACK can be fed back through the PUSCH, and the RBs allocated to the UE still need to meet the range requirements of RB21 to RB90.

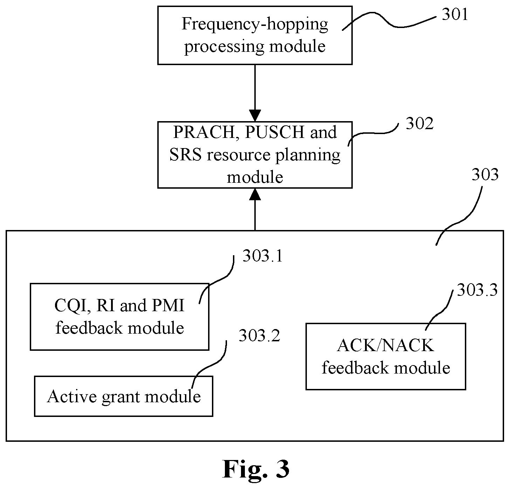

Referring to Fig. 3, the present invention also relates to a device for implementing an asymmetrical bandwidth system, which includes a resource planning module 302, configured to, within an limited uplink spectrum range, schedule the physical uplink share channel and configures the physical random access channel; and an uplink control information processing module 303, configured to carry uplink control information through the physical uplink share channel in the semi-persistent scheduling when the user equipment initiates random access according to the configuration of the physical random access channel and establishes an RRC link.

The device for implementing an asymmetrical bandwidth system also includes a frequency-hopping module 301 for limiting the bandwidth range of the physical uplink share channel and the SRS.

The uplink control information processing module 303 includes a CQI/RI/PMI feedback module 303.1, an active grant module 303.2 and an ACK/NACK feedback module 303.3.

The description of specific structure for the device for implementing asymmetrical bandwidth system will be given below.

301, frequency-hopping module: this module is responsible for frequency-hopping design of the PUSCH and the SRS, for ensuring that the spectrum resources actually used by the PUSCH and the SRS do not exceed the limited uplink bandwidth range due to the influence of frequency-hopping mode.

Taking the LTE FDD system as an example, it is assumed that the bandwidth of downlink system is x MHz, the uplink carrier frequency is fc MHz, and the bandwidth of uplink system is y MHz, which means that the uplink available spectrum range is [fc, fc+y].

In the above, x represents the size of system bandwidth prescribed in the protocol, which is set as 1.4, 3, 5, 10, 15, 20 in the LTE R8 and can be extended to 100 in the LTE R10, and the frequency-hopping module sets the relationship between x and y as x≥y≥1.4 MHz so as to limit the bandwidth range.

302, PUSCH, PRACH and SRS resource allocation module: this module is configured to allocate the PRACH position within the present cell and the SRS spectrum position of the UE, and schedule the PUSCH resources, thereby ensuring that the transmission frequency band of the PUSCH, the PRACH and the SRS is within the limited uplink range.

303, uplink control information processing module: this module includes three sub-modules, i.e., a CQI/RI/PMI feedback module 303.1, an active grant module 303.2 and an ACK/NACK feedback module 303.3, which are respectively described as follows.

303.1, CQI/RI/PMI feedback module: this module realizes CQI/RI/PMI feedback through SPS. The SPS is configured according to CQI feedback period for feeding back CQI/RI/PMI information. The period of SPS is equal to the CQI feedback period, the size of SPS resources is determined according to the number of bits of information needed to be fed back and broadband Single Interference Noise Ratio (SINR), wherein the number of bits of information needed to be fed back needs to contain BSR and ACK/NACK in addition to CQI/RI/PMI.

303.2 Active grant module: this module is responsible for notifying a scheduler to perform active grant for replacing the process that the UE sends the SR. When the RRC connection is established successfully, the module notifies the scheduler to grant the UE, and the granted contents are determined according to the module 303.1.

303.3, ACK/NACK feedback module: this module is configured to realize the ACK/NACK feedback of the PDSCH. Specific processing is as follows.

It is judged whether or not the next sub-frame is an uplink SPS sub-frame at the same time of performing uplink grant, if so, no processing is performed, if the next sub-frame is not an uplink SPS sub-frame, uplink grant is transmitted at the same time of performing downlink grant, and the size of granted resources is determined according to the broadband SINR and the number of bits of information needed to be carried, wherein the number of bits of uplink information should contain ACK/NACK and BSR.

The above is the further detailed description made to the present invention in conjunction with specific preferable embodiments, but it should not be considered that the specific embodiments of the present invention are only limited to these descriptions. For those skilled in the art to which the present invention belongs, many deductions and replacements can be made without departing from the inventive concept. Such deductions and replacements should fall within the scope of protection of the present invention.

## Claims

1. A method for implementing an asymmetrical bandwidth system in an LTE FDD protocol framework, comprising the steps of:
within a limited uplink spectrum range, an evolved node B scheduling physical uplink share channel resources and configuring physical random access channel resources and resources used for a sounding reference signal;
a user equipment initiating random access according to the configuration of the physical random access channel resources, and establishing a Radio Resource Control, RRC, connection with the evolved node B;
the evolved node B semi-persistently scheduling the user equipment; and
the user equipment carrying, in a semi-persistent scheduling state, uplink control information through a physical uplink share channel,
wherein the spectrum range is x>y>1.4 MHz, wherein a bandwidth of a downlink system is x MHz, and a bandwidth of an uplink system is y MHz.

2. The method for implementing an asymmetrical bandwidth system according to claim 1, wherein the period of semi-persistent scheduling is the period of periodic Channel Quality Indicator, CQI, feedback.

3. The method for implementing an asymmetrical bandwidth system according to claim 1, wherein the uplink control information comprises CQI, channel matrix Rank Indication RI, Pre-coding Matrix Indicator PMI, and partial Acknowledgement /Negative acknowledgement, ACK/NACK, feedback; and Schedule Request, SR, information is implemented in a way that the evolved node B semi-persistently schedules the user equipment.

4. The method for implementing an asymmetrical bandwidth system according to any one of claims 1 to 3, wherein for an ACK/NACK feedback which is not able to be scheduled in the semi-persistent scheduling state, an uplink grant with respect to the ACK/NACK feedback which is not able to be scheduled is transmitted by the evolved node B at the same time of the transmission of a physical downlink share channel.

5. A device for implementing an asymmetrical bandwidth system in an LTE FDD protocol framework, comprising:
a resource planning module (302), configured to, within a limited uplink spectrum range, schedule physical uplink share channel resources, and configure physical random access channel resources and resources used for a sounding reference signal; and
an uplink control information processing module (303), configured to carry uplink control information in a semi-persistent scheduling through a physical uplink share channel when a user equipment initiates random access according to the configuration of the physical random access channel resources and establishes a Radio Resource Control, RRC, link,
wherein the device further comprising: a frequency-hopping module (301) for limiting a bandwidth range of the physical uplink share channel, and the bandwidth range limited by the frequency-hopping module (301) is x>y>1.4 MHz, wherein a bandwidth of a downlink system is x MHz, and a bandwidth of an uplink system is y MHz.

6. The device for implementing an asymmetrical bandwidth system according to claim 5, wherein the uplink control information processing module (303) comprises a Channel Quality Indicator CQI/ Rank Indication RI/ Pre-coding Matrix Indicator PMI feedback module (303.1), an active grant module (303.2) and an Acknowledgement/ Negative acknowledgement, ACK/NACK, feedback module (303.3).

7. The device for implementing an asymmetrical bandwidth system according to claim 6, wherein the period of semi-persistent scheduling is the period of periodic CQI feedback.

8. The device for implementing an asymmetrical bandwidth system according to claim 6, wherein the size of semi-persistently scheduled resource is determined according to the number of bits of information needed to be fed back and broadband Single Interference Noise Ratio, SINR.

## Patentansprüche

1. Verfahren zum Implementieren eines asymmetrischen Bandbreitensystems in einem LTE FDD-Protokollrahmen, das die folgenden Schritte umfasst:
in einem begrenzten Aufwärtsspektrumsbereich Planen von physischen Aufwärtsfreigabekanalressourcen und Auslegen von physischen Direktzugriffskanalressourcen und von Ressourcen, die für ein Sondierungsreferenzsignal verwendet werden, durch einen entwickelten Knoten B;
Initiieren eines Direktzugriffs gemäß der Auslegung der physischen Direktzugriffskanalressourcen und Einrichten einer Funkressourcensteuerungs(RRC)-Verbindung mit dem entwickelten Knoten B durch eine Teilnehmereinrichtung;
semipersistentes Planen der Teilnehmereinrichtung durch den entwickelten Knoten B; und
in einem semipersistenten Planungszustand Transportieren von Aufwärtssteuerinformationen durch die Teilnehmereinrichtung über einen physischen Aufwärtsfreigabekanal,
wobei der Spektrumsbereich x>y>1,4 MHz, eine Bandbreite eines Abwärtssystems x MHz und eine Bandbreite eines Aufwärtssystems y MHz ist.

2. Verfahren zum Implementieren eines asymmetrischen Bandbreitensystems nach Anspruch 1, wobei die Periode des semipersistenten Planens die Periode einer periodischen Kanalqualitätsindikator(CQI)-Rückmeldung ist.

3. Verfahren zum Implementieren eines asymmetrischen Bandbreitensystems nach Anspruch 1, wobei die Aufwärtssteuerinformationen einen CQI, eine Kanalmatrixranganzeige RI, einen Vorcodierungsmatrixindikator PMI und eine Rückmeldung zu einer teilweisen Bestätigung/Negativbestätigung, ACK/NACK, umfasst; und Planungsanforderungs(SR)-Informationen in einer Weise implementiert werden, dass der entwickelte Knoten B die Teilnehmereinrichtung semipersistent plant.

4. Verfahren zum Implementieren eines asymmetrischen Bandbreitensystems nach einem der Ansprüche 1 bis 3, wobei für eine ACK/NACK-Rückmeldung, die im semipersistenten Planungszustand nicht geplant werden kann, eine Aufwärtsgewährung mit Bezug auf die ACK/NACK-Rückmeldung, die nicht geplant werden kann, vom entwickelten Knoten B zur gleichen Zeit wie die Übertragung eines physischen Abwärtsfreigabekanals übertragen wird.

5. Vorrichtung zum Implementieren eines asymmetrischen Bandbreitensystems in einem LTE FDD-Protokollrahmen, die Folgendes umfasst:
ein Ressourceneinplanungsmodul (302), das dazu ausgelegt ist, in einem begrenzten Aufwärtsspektrumsbereich physische Aufwärtsfreigabekanalressourcen zu planen und physische Direktzugriffskanalressourcen und Ressourcen, die für ein Sondierungsreferenzsignal verwendet werden, auszulegen; und
ein Aufwärtssteuerinformationsverarbeitungsmodul (303), das dazu ausgelegt ist, Aufwärtssteuerinformationen in einer semipersistenten Planung über einen physischen Aufwärtsfreigabekanal zu transportieren, wenn eine Teilnehmereinrichtung einen Direktzugriff gemäß der Auslegung der physischen Direktzugriffskanalressourcen initiiert und einen Funkressourcensteuerungs(RRC)-Link einrichtet,
wobei die Vorrichtung ferner Folgendes umfasst: ein Frequenzsprungmodul (301) zum Begrenzen eines Bandbreitenbereichs des physischen Aufwärtsfreigabekanals und der Bandbreitenbereich, der durch das Frequenzsprungmodul (301) begrenzt ist, x>y>1,4 MHz ist, wobei eine Bandbreite eines Abwärtssystems x MHz und eine Bandbreite eines Aufwärtssystems y MHz ist.

6. Vorrichtung zum Implementieren eines asymmetrischen Bandbreitensystems nach Anspruch 5, wobei das Aufwärtssteuerinformationsverarbeitungsmodul (303) ein Kanalqualitätsindikator(CQI)/Ranganzeige(RI)/Vorcodieru ngsmatrixindikator(PMI)-Rückmeldungsmodul (303.1), ein aktives Gewährungsmodul (303.2) und ein Bestätigunggs/Negativbestätigungs(ACK/NACK)-Rückmeldungsmodul (303.3) umfasst.

7. Vorrichtung zum Implementieren eines asymmetrischen Bandbreitensystems nach Anspruch 6, wobei die Periode des semipersistenten Planens die Periode einer periodischen CQI-Rückmeldung ist.

8. Vorrichtung zum Implementieren eines asymmetrischen Bandbreitensystems nach Anspruch 6, wobei die Größe einer semipersistent geplanten Ressource gemäß der Anzahl von Bits von Informationen, die rückgemeldet werden müssen, und einem Breitband-Signal-Interferenz-Rauschen-Verhältnis, SINR, bestimmt wird.

## Revendications

1. Procédé pour implémenter un système de largeur de bande asymétrique dans un cadre de protocole LTE FDD, comprenant les étapes suivantes :
dans une plage de spectres de liaison montante limitée, l'ordonnancement par un noeud B évolué de ressources de canal physique de partage de liaison montante et la configuration par celui-ci de ressources de canal physique d'accès aléatoire et de ressources utilisées pour un signal de référence de sondage ;
l'initiation par un équipement utilisateur, d'un accès aléatoire selon la configuration des ressources de canal physique d'accès aléatoire, et l'établissement par celui-ci d'une connexion de commande de ressources radio, RRC, avec le noeud B évolué ;
l'ordonnancement semi-persistant de l'équipement utilisateur par le noeud B évolué ; et
le transport par l'équipement utilisateur, dans un état d'ordonnancement semi-persistant, d'informations de commande de liaison montante à travers un canal physique de partage de liaison montante,
dans lequel la plage de spectres est x > y > 1,4 MHz, dans lequel une largeur de bande d'un système de liaison descendante est x MHz, et une largeur de bande d'un système de liaison montante est y MHz.

2. Procédé pour implémenter un système de largeur de bande asymétrique selon la revendication 1, dans lequel la période de l'ordonnancement semi-persistant est la période d'un retour d'un indicateur de qualité de canal, CQI, périodique.

3. Procédé pour implémenter un système de largeur de bande asymétrique selon la revendication 1, dans lequel les informations de commande de liaison montante comprennent une indication de rang, RI, de matrice de canal, CQI, un indicateur de matrice de précodage PMI, et un retour d'accusé de réception partiel/accusé de réception négatif, ACK/NACK ; et des informations de demande d'ordonnancement, SR, sont implémentées de manière à ce que le noeud B évolué ordonnance de manière semi-persistante l'équipement utilisateur.

4. Procédé pour implémenter un système de largeur de bande asymétrique selon l'une quelconque des revendications 1 à 3, dans lequel pour un retour ACK/NACK qui n'est pas capable d'être ordonnancé dans l'état d'ordonnancement semi-persistant, une autorisation de liaison montante quant au retour ACK/NACK qui n'est pas capable d'être ordonnancé est transmise par le noeud B évolué en même temps que la transmission d'un canal physique de partage de liaison descendante.

5. Dispositif pour implémenter un système de largeur de bande asymétrique dans un cadre de protocole LTE FDD, comprenant :
un module de planification de ressources (302), configuré pour, dans une plage de spectres de liaison montante limitée, ordonnancer des ressources de canal physique de partage de liaison montante, et configurer des ressources de canal physique d'accès aléatoire et des ressources utilisées pour un signal de référence de sondage ; et
un module de traitement d'informations de commande de liaison montante (303), configuré pour transporter des informations de commande de liaison montante dans un ordonnancement semi-persistant à travers un canal physique de partage de liaison montante lorsqu'un équipement utilisateur initie un accès aléatoire selon la configuration des ressources de canal physique d'accès aléatoire et établit un lien de commande de ressources radio, RRC,
dans lequel le dispositif comprenant en outre : un module de saut de fréquence (301) pour limiter une plage de largeurs de bande du canal physique de partage de liaison montante, et la plage de largeurs de bande limitée par le module de saut de fréquence (301) est x > y > 1,4 MHz, dans lequel une largeur de bande d'un système de liaison descendante est x MHz, et une largeur de bande d'un système de liaison montante est y MHz.

6. Dispositif pour implémenter un système de largeur de bande asymétrique selon la revendication 5, dans lequel le module de traitement d'informations de commande de liaison montante (303) comprend un module de retour d'indicateur de qualité de canal CQI/d'indication de rang RI/d'indicateur de matrice de précodage PMI (303.1), un module d'autorisation actif (303.2) et un module de retour d'accusé de réception/accusé de réception négatif, ACK/NACK (303.3).

7. Dispositif pour implémenter un système de largeur de bande asymétrique selon la revendication 6, dans lequel la période d'ordonnancement semi-persistant est la période d'un retour CQI périodique.

8. Dispositif pour implémenter un système de largeur de bande asymétrique selon la revendication 6, dans lequel la taille d'une ressource ordonnancée de manière semi-persistante est déterminée selon le nombre de bits d'informations qu'il faut retourner et un rapport signal sur interférence plus bruit, SINR, à large bande.
